# FASCICULE DE BREVET EUROPEEN

(11) **EP 3 344 508 B1**
(45) Date de publication et mention de la délivrance du brevet: **08.06.2022**
(21) Numéro de dépôt: 16775277.3
(22) Date de dépôt: 30.08.2016
(51) Int. Cl.: B60W 60/00, B60W 50/14

(54) **PROCEDE D'ASSISTANCE D'UN CONDUCTEUR DANS LA TRANSITION D'UN PREMIER MODE AUTONOME VERS UN DEUXIEME MODE AUTONOME**
FAHRERASSISTENZVERFAHREN BEIM ÜBERGANG VON EINEM ERSTEN AUTONOMEN MODUS ZU EINEM ZWEITEN AUTONOMEN MODUS
METHOD FOR ASSISTING A DRIVER IN TRANSITIONING FROM A FIRST AUTONOMOUS MODE TO A SECOND AUTONOMOUS MODE

(30) Priorité: 03.09.2015 FR 1558186
(43) Date de publication de la demande: 11.07.2018
(73) Titulaire: PSA Automobiles SA, 78300 Poissy (FR)
(72) Inventeur: TACCORI DUVERGEY, Celine, 92120 Montrouge (FR); LAINE, Vincent, 78340 Les Clayes sous Bois (FR); FERON, Stephane, 92350 Le Plessis Robinson (FR)
(74) Mandataire: Jeannin, Laurent Jean-Pierre
(86) Numéro de dépôt international: PCT/FR2016/052145
(87) Numéro de publication internationale: WO 2017/037377

(56) Documents cités:
- EP-A1- 1 726 501
- EP-A2- 1 561 631
- DE-A1-102009 033 752
- JP-A- H0 986 223
- US-A1- 2015 094 899

## Description

La présente invention concerne le domaine des systèmes d'assistance à la conduite pour véhicules automobiles.

Les systèmes d'assistance à la conduite sont désormais largement répandus dans les véhicules automobiles récents et connaissent un développement rapide.

On connaît par exemple les régulateurs de vitesse adaptatifs, mieux connus sous l'acronyme anglais ACC (pour « Adaptive Cruise Control » ou « Autonomous Cruise Control »). Un tel mode d'assistance ajuste de manière automatique la vitesse afin de maintenir un intervalle de sécurité constant avec le véhicule à partir des informations recueillis sur ce véhicule (notamment la distance et la vitesse d'approche) à l'aide d'un ou plusieurs capteurs de type radar, lidar ou infrarouge.

On connaît également, notamment de la demande de brevet américaine US 2013/0096767, des systèmes dynamiques anti-franchissement involontaire de ligne. Ces derniers, désignés généralement sous les acronymes ALKA (pour « Active Lane Keep Assist »), LKAS (pour « Lane Keep Assistance System), ALA (pour « Active Lane Assist) ou encore ALC (pour « Active Lane Control ») détectent les lignes de marquages au sol à l'aide de capteurs et/ou de caméras optiques, et interviennent dynamiquement sur le véhicule lorsque ce dernier s'écarte de sa voie de circulation. Dans un tel cas de figure, le système d'assistance à la conduite va alors corriger automatiquement la direction du véhicule et/ou activer le freinage.

Les modes d'assistance à la conduite évoqués ci-avant sont activables chacun de manière indépendante par l'intermédiaire d'un bouton de commande dédié, situé par exemple sur le volant, sur un bras de commande sous-volant ou bien encore sur la planche de bord du véhicule.

Récemment, de nouveaux systèmes d'assistance à la conduite ont fait leur apparition dans les véhicules automobiles haut de gamme.

Tel est notamment le cas des assistants de conduite en embouteillage (plus connus sous l'acronyme anglais TJC pour « Traffic Jam Chauffeur ») destinés à soulager le conducteur dans des situations de trafic dense ou de bouchon (vitesse inférieure à 50/70 km/h) sur des routes à chaussées séparées (autoroutes et voies rapides). Ces derniers sont capables de réguler automatiquement la vitesse jusqu'à l'arrêt afin de maintenir une distance voulue avec le véhicule précédant tout en assurant le contrôle de la direction, de sorte que le conducteur peut lâcher le volant et les pédales pour vaquer à d'autres activités.

On peut également citer les systèmes d'assistance à la conduite sur autoroute communément désignés sous les acronymes HAD (pour « Highway Automated Driving ») ou AHDA (pour « Automatic Highway Driving Assist ») et aptes à délester entièrement le conducteur dans des situations de trafic fluide (vitesse proche de la limite réglementaire) sur des routes à chaussées séparées.

A l'usage, la multiplication de ces modes d'assistance à la conduite activables séparément a tendance à « perdre » les utilisateurs qui renoncent souvent à les utiliser faute de savoir sélectionner le mode adéquat en fonction des circonstances. En outre, il existe un risque, qu'à un instant donné, le conducteur ne sache plus quelles tâches de conduite lui incombent.

On connait aussi par le document US 2015/094899 A1 un système d'assistance à la conduite d'un véhicule capable de commander le véhicule au moins partiellement automatiquement.

La présente invention vise à remédier aux problèmes précités et notamment à faciliter l'utilisation des différents modes d'assistance à la conduite d'un véhicule automobile.

Elle propose plus précisément à cet effet un procédé d'assistance d'un conducteur d'un véhicule ledit procédé étant mis en œuvre par une unité de pilotage d'un système d'assistance à la conduite, comportant un premier mode autonome activé et assurant un premier ensemble de tâches de conduite, le procédé comportant les étapes de :
- détection d'une future désactivation du premier mode autonome,
- détermination d'un deuxième mode autonome disponible, assurant un deuxième ensemble de tâches de conduite,
- la détermination des tâches assurées uniquement par un des deux modes autonomes,
- émission d'un signal, à destination du conducteur, indiquant les tâches déterminées,
- activation automatique du deuxième mode autonome.

L'invention permet de faciliter le passage d'un mode autonome à un autre tout en garantissant la sécurité du véhicule. Les tâches devant être transférée du véhicule au conducteur ou du conducteur au véhicule sont clairement identifiées, ce qui contribue à la sécurité lors de la transition. Le conducteur n'a pas à choisir parmi plusieurs modes autonomes. Ce choix est délégué au système d'assistance. L'invention permet de fournir au conducteur suffisamment d'information pour que celui-ci sache quelles tâches de conduites est à sa charge où est sur le point d'être à sa charge.

Avantageusement, le nombre de tâches de conduite du premier mode autonome est supérieur au nombre de tâches de conduite du deuxième mode autonome alors le signal émis indique au conducteur les tâches supplémentaires à sa charge.

Avantageusement, si le nombre de tâches de conduite du premier mode autonome est inférieure au nombre de tâches de conduite du deuxième mode autonome alors le signal émis indique au conducteur les tâches supplémentaires dont il est déchargé.

Avantageusement, lors de l'étape de détermination d'un deuxième mode autonome disponible, si plusieurs modes d'assistance sont disponibles alors le mode d'assistance prenant en charge le plus grand nombre de tâches de conduite est sélectionné.

Avantageusement, le système d'assistance à la conduite comporte au moins un des modes d'assistance suivants :
- Un premier mode d'assistance ne contrôlant ni le déplacement longitudinal du véhicule, ni son déplacement latéral.
- Un deuxième mode d'assistance contrôlant le déplacement longitudinal du véhicule, mais pas son déplacement latéral;
- Un troisième mode d'assistance contrôlant le déplacement longitudinal du véhicule et son déplacement latéral, sous la supervision du conducteur ;
- Un quatrième mode d'assistance contrôlant le déplacement longitudinal du véhicule et son déplacement latéral, sans la supervision du conducteur.

Avantageusement, le signal émis comporte un affichage de pictogramme pour chaque tâche déterminée.

Avantageusement, le signal émis comporte un message audio indiquant la ou les tâche(s) déterminée(s).

Avantageusement, le procédé d'aide à l'activation selon l'invention, est activé seulement si au moins le deuxième mode autonome est disponible.

L'invention concerne aussi un système d'assistance à la conduite comportant un module d'évaluation, une unité de pilotage comportant un premier mode autonome assurant un premier ensemble de tâches de de conduite lorsqu'il est activé, ladite unité de pilotage comportant :
- des moyens de détection d'une future non-disponibilité du premier mode autonome,
- des moyens de détermination d'un deuxième mode autonome disponible, assurant un deuxième ensemble de tâches de conduite,
- des moyens de détermination des tâches assurées uniquement par un des deux modes autonomes,
- des moyens d'émission d'un signal, à destination du conducteur, indiquant les tâches déterminées,
- des moyens d'activation du deuxième mode autonome.

L'invention concerne aussi un véhicule caractérisé en ce qu'il comporte un système d'assistance à la conduite selon l'invention.

D'autres caractéristiques et avantages de l'invention apparaîtront à l'examen de la description détaillée ci-après, et des dessins annexés, sur lesquels :
- la figure 1 représente un diagramme fonctionnel d'un système automatisé d'assistance à la conduite pour véhicule ;
- la figure 2 est un organigramme du procédé selon l'invention ;
- la figure 3 montre un exemple de pictogrammes représentant une tâche de conduite.

Les dessins annexés pourront non seulement servir à compléter l'invention, mais aussi contribuer à sa définition, le cas échéant.

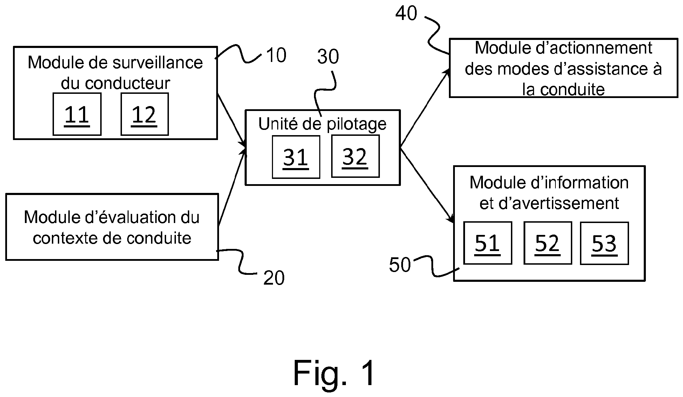

En référence à la figure 1, le système d'assistance automatisée à la conduite 1 comporte un module de surveillance du conducteur 10, un module d'évaluation du contexte de conduite 20, une unité de pilotage 30, un module d'actionnement des modes d'assistance à la conduite 40, ainsi qu'un module d'information et d'avertissement 50.

Le module de surveillance du conducteur 10 comprend par exemple un sous-module 11 de détection de la présence des mains du conducteur sur le volant 10, ainsi qu'un sous-module 12 de détection de celle de ses pieds sur les pédales d'accélération, de freinage et d'embrayage. Le module de surveillance du conducteur 10 peut également comporter une caméra pointée vers le visage du conducteur de façon à déterminer son niveau d'attention et/ou la direction de son regard.

Le module d'évaluation du contexte de conduite 20 comprend une caméra par exemple de type CCD (pour « Capteurs à Couplage de Charges ») orientée vers l'avant du véhicule et délivrant des images permettant de déterminer le type de route empruntée (autoroute, voie rapide ou bien route secondaire) à partir de certains paramètres caractéristiques tels que la largeur de la voie, le marquage au sol (couleur, largeur et espacement des lignes) et la présence éventuelle d'une barrière ou d'un terre-plein central de séparation entre les deux sens de circulation. L'analyse des images fournies par cette caméra permet en outre d'établir le niveau de fluidité du trafic routier.

Le module 20 comporte également une pluralité de capteurs mesurant certains paramètres internes de conduite tels que la vitesse instantanée du véhicule et l'angle de braquage du volant.

Les données recueillies par les deux modules de surveillance du conducteur 10 et d'évaluation du contexte de conduite 20 sont acheminés en temps réel vers l'unité de pilotage 30 à laquelle ces deux modules sont reliés.

L'unité de pilotage 30, constituée de préférence par le boîtier de servitude intelligent (BSI) du véhicule, comporte un calculateur 31 ainsi qu'un module de stockage 32 comprenant de la mémoire non volatile de type EEPROM ou FLASH et de la mémoire vive.

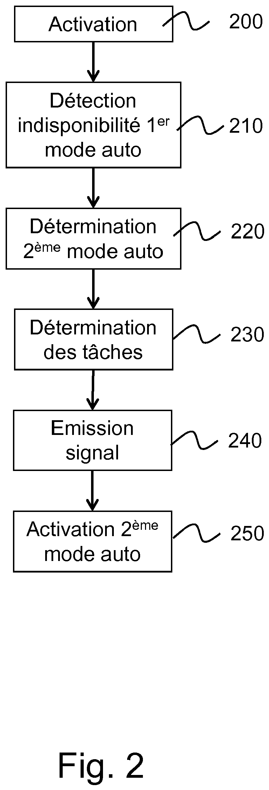

La mémoire non volatile stocke un processus d'aide à l'activation des modes d'assistance à la conduite du véhicule automobile dont l'organigramme est représenté sur la figure 2 et qui est mis en oeuvre de manière cyclique selon une période prédéterminée comprise de préférence entre 100 ms et 1000 ms.

L'ensemble des informations contenues dans cette mémoire non volatile peut être mis à jour par des moyens de communication ou des moyens de lecture d'un support de données.

L'unité de pilotage 30 est reliée au module d'actionnement 40 auquel elle est apte à transmettre l'ordre d'activer ou de désactiver l'un des modes d'assistance à la conduite.

Ce module d'actionnement 40 comporte une pluralité d'actionneurs aptes à contrôler certains organes du véhicule tels que la direction, l'accélération, le freinage et la boîte de vitesse pour assurer la mise en oeuvre des différents modes d'assistance à la conduite dont est doté le véhicule, à savoir en l'espèce :
- un premier mode d'assistance dans lequel le véhicule ne contrôle ni le déplacement longitudinal, ni le déplacement latéral du véhicule,
- un deuxième mode d'assistance permettant une régulation de vitesse adaptative, assurant uniquement le contrôle du déplacement longitudinal du véhicule et dans lequel le contrôle du déplacement latéral reste à la charge du conducteur via le volant ;
- un troisième mode d'assistance, par exemple pour la conduite sur autoroute, assurant à la fois le contrôle latéral et longitudinal du véhicule dans des situations de trafic fluide (vitesse proche de la limite réglementaire) sur des routes à chaussées séparées et dans lequel le conducteur est tenu de garder les yeux fixés sur la route car le guidage ne peut être maintenu que sur une courte période de 1 à 3 secondes en cas de perte d'information (désengagement avec transition rapide).
- Un quatrième mode d'assistance, par exemple pour la conduite en embouteillage, assurant à la fois le contrôle du déplacement latéral et longitudinal du véhicule dans des situations de trafic dense ou de bouchon (vitesse inférieure à une valeur seuil prédéterminée comprise par exemple entre 50 et 70 km/h) et sur des routes à chaussées séparées et dans lequel conducteur n'est pas tenu de garder les yeux fixés sur la route et peut vaquer à d'autres occupations car le guidage peut être maintenu sur une période de quelques secondes (comprise par exemple entre 5 et 15 s) en cas de perte d'information (désengagement avec transition normale).

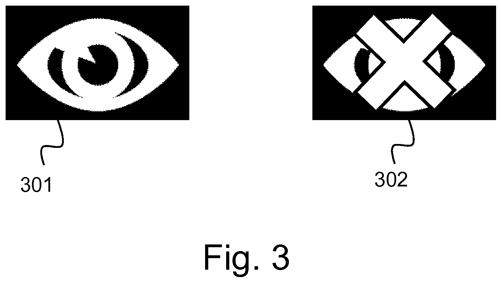

Le module d'information et d'avertissement 50 comporte un premier écran d'information 51 intégré à la console centrale de la planche de bord du véhicule (ce dernier étant constitué de préférence par l'écran d'affichage du dispositif d'info-divertissement) et apte à diffuser des messages visuels indiquant la ou les tâches de conduites évoluant lors d'une transition d'un mode autonome à un autre. Pour une meilleure lisibilité, ces informations sont de préférence affichées sous la forme de pictogrammes lumineux tels que ceux représentés sur la figure 3.

Le module 50 comprend également de préférence un second écran d'avertissement 52 intégré au combiné d'instruments du véhicule et destiné à afficher des messages visuels.

Ce module 50 est également doté d'une sirène 53 apte à émettre un signal acoustique d'alerte lors d'une transition d'un mode autonome à un autre.

On va maintenant décrire en détails et à l'appui de l'organigramme de la figure 2, les différentes étapes du procédé selon l'invention.

Au cours d'une première étape 200 facultative, l'unité de pilotage 30 reçoit une commande mise en route du processus d'aide à l'activation des modes d'assistance à la conduite. Cette commande est par exemple consécutive à une pression d'une touche dédiée par le conducteur du véhicule.

En l'absence d'une telle étape, on suppose que le processus d'aide à l'activation des modes d'assistance à la conduite est actif dès mise en route du véhicule.

Le procédé comporte aussi une étape de détection 210 d'une future désactivation du premier mode autonome. Au cours de cette étape, l'unité de pilotage 30 détermine, à l'aide des données transmises par le module d'évaluation du contexte de conduite 20, le ou les modes d'assistance à la conduite pouvant être activés dans un future proche.

Une future désactivation du premier mode autonome peut être due à une future non disponibilité du premier mode (liée par exemple à un disfonctionnement ou à un changement de contexte de conduite) ou une future disponibilité d'un deuxième mode autonome assurant plus de tâches de conduite.

Par exemple, on suppose que le véhicule circule à une vitesse de 110 km/h sur une voie rapide sur laquelle le trafic est fluide, l'unité de pilotage 30 a activé le troisième mode (assistance à la conduite sur autoroute).

On suppose que le véhicule arrive sur une portion d'autoroute embouteillée et va devoir rouler à vitesse réduite (40 km/h), l'unité de pilotage détermine alors que le quatrième mode d'assistance (assistance à la conduite en embouteillage) va devenir activable lors d'une une étape de détermination (220) d'un deuxième mode autonome disponible,

Le troisième mode (assistance à la conduite sur autoroute) assure le contrôle latéral et longitudinal du véhicule mais une tâche de surveillance de la route reste à la charge du conducteur.

Le quatrième mode d'assistance (assistance à la conduite en embouteillage) le contrôle latéral et longitudinal du véhicule mais sans tâche de surveillance de la route de la part du conducteur.

Le procédé comporte aussi une étape de la détermination 230 des tâches assurées uniquement par un des deux modes autonomes.

Dans l'exemple seule la tâche de surveillance de la route est assurée un par un des deux modes.

Le procédé comporte aussi une étape d'émission 240 d'un signal, à destination du conducteur, indiquant les tâches déterminées.

Deux cas de figures peuvent se présenter :
- le nombre de tâches de conduite du premier mode autonome est supérieur au nombre de tâches de conduite du deuxième mode autonome,
- le nombre de tâches de conduite du premier mode autonome est inférieure au nombre de tâches de conduite du deuxième mode autonome.

Dans le premier cas, le signal émis indique au conducteur les tâches supplémentaires à sa charge.

Dans le deuxième cas, le signal émis indique au conducteur les tâches supplémentaires dont il est déchargé.

Le procédé comporte aussi une étape d'activation automatique (250) du deuxième mode autonome. Cette activation a lieu sans action du conducteur. L'activation est automatique

De façon avantageuse, le signal émis comporte un affichage de pictogramme pour chaque tâche déterminée.

La figure 3 montre un exemple de pictogrammes représentant une tâche de conduite. Si une tâche de surveillance de la route revient au conducteur alors le premier pictogramme 301 est affiché. Par contre, si le conducteur est libéré de sa tâche de surveillance alors c'est le deuxième pictogramme 302 qui est affiché.

De façon avantageuse, le signal émis comporte un message audio indiquant la ou le(s) tâche(s) déterminée(s). Le message audio est par exemple : « vous pouvez enlever vos mains », « vous pouvez faire autre chose » ou « vous pouvez dormir » en fonction du premier et du deuxième mode autonome.

De façon préférentielle, le procédé n'est activé que si le deuxième mode autonome est disponible. De cette façon, lors d'une transition redonnant des tâches de conduites au conducteur, le deuxième mode autonome est toujours disponible. Ainsi, le nombre de tâches de conduite à récupérer en même temps se trouve limité Cette caractéristique permet de donc d'améliorer la sécurité lors d'une transition.

## Revendications

1. Procédé d'assistance d'un conducteur d'un véhicule ledit procédé étant mis en œuvre par une unité de pilotage (30) d'un système (1) d'assistance à la conduite, comportant un premier mode autonome activé et assurant un premier ensemble de tâches de conduite, le procédé comportant une étape de détection (210) d'une future désactivation du premier mode autonome, le procédé étant **caractérisé en ce qu'**il comporte les étapes de :
- détermination (220) d'un deuxième mode autonome disponible, assurant un deuxième ensemble de tâches de conduite,
- la détermination (230) des tâches assurées uniquement par un des deux modes autonomes,
- émission (240) d'un signal, à destination du conducteur, indiquant les tâches déterminées,
- activation automatique (250) du deuxième mode autonome.

2. Procédé d'assistance d'un conducteur d'un véhicule selon la revendication 1, **caractérisé en ce que** si le nombre de tâches de conduite du premier mode autonome est supérieur au nombre de tâches de conduite du deuxième mode autonome alors le signal émis indique au conducteur les tâches supplémentaires à sa charge.

3. Procédé d'assistance d'un conducteur d'un véhicule selon l'une des revendications 1 ou 2, **caractérisé en ce que** si le nombre de tâches de conduite du premier mode autonome est inférieure au nombre de tâches de conduite du deuxième mode autonome alors le signal émis indique au conducteur les tâches supplémentaires dont il est déchargé.

4. Procédé d'assistance d'un conducteur d'un véhicule selon l'une des revendications précédentes, lors de l'étape (220) de détermination d'un deuxième mode autonome disponible, si plusieurs modes d'assistance sont disponibles alors le mode d'assistance prenant en charge le plus grand nombre de tâches de conduite est sélectionné.

5. Procédé d'assistance d'un conducteur d'un véhicule selon l'une des revendications précédentes, **caractérisé en ce que** le système (1) d'assistance à la conduite comporte au moins un des modes d'assistance suivants :
- Un premier mode d'assistance ne contrôlant ni le déplacement longitudinal du véhicule, ni son déplacement latéral.
- Un deuxième mode d'assistance contrôlant le déplacement longitudinal du véhicule, mais pas son déplacement latéral;
- Un troisième mode d'assistance contrôlant le déplacement longitudinal du véhicule et son déplacement latéral, sous la supervision du conducteur ;
- Un quatrième mode d'assistance contrôlant le déplacement longitudinal du véhicule et son déplacement latéral, sans la supervision du conducteur.

6. Procédé d'assistance d'un conducteur d'un véhicule selon l'une des revendications précédentes, **caractérisé en ce que** le signal émis comporte un affichage de pictogramme pour chaque tâche déterminée.

7. Procédé d'assistance d'un conducteur d'un véhicule selon l'une des revendications précédentes, **caractérisé en ce que** le signal émis comporte un message audio indiquant la ou les tâche(s) déterminée(s).

8. Procédé d'assistance d'un conducteur d'un véhicule selon l'une des revendications 5 à 7, **caractérisé en ce que** ledit procédé est activé seulement si au moins le deuxième mode autonome est disponible.

9. Système (1) d'assistance à la conduite comportant un module d'évaluation, une unité de pilotage (30) comportant un premier mode autonome assurant un premier ensemble de tâches de conduite lorsqu'il est activé et des moyens de détection d'une future non-disponibilité du premier mode autonome, **caractérisé en ce que** ladite unité de pilotage (30) comporte :
- des moyens de détermination d'un deuxième mode autonome disponible, assurant un deuxième ensemble de tâches de conduite,
- des moyens de détermination des tâches assurées uniquement par un des deux modes autonomes,
- des moyens d'émission d'un signal, à destination du conducteur, indiquant les tâches déterminées,
- des moyens d'activation du deuxième mode autonome.

10. Véhicule **caractérisé en ce qu'**il comporte un système (1) d'assistance à la conduite selon la revendication précédente.

## Patentansprüche

1. Verfahren zur Unterstützung eines Fahrers eines Fahrzeugs, wobei das Verfahren von einer Steuereinheit (30) eines Fahrerassistenzsystems (1) durchgeführt wird, das einen ersten aktivierten autonomen Modus umfasst und eine erste Gruppe von Fahraufgaben sicherstellt, wobei das Verfahren einen Schritt der Erfassung (210) einer zukünftigen Deaktivierung des ersten autonomen Modus umfasst, wobei das Verfahren **dadurch gekennzeichnet ist, dass** es die folgenden Schritte umfasst: - Erfassen (210) einer zukünftigen Deaktivierung des ersten autonomen Modus, wobei das Verfahren die folgenden Schritte umfasst: :
- Bestimmung (220) eines zweiten verfügbaren autonomen Modus, der einen zweiten Satz von Fahraufgaben sicherstellt,
- Bestimmung (230) der Aufgaben, die nur von einem der beiden autonomen Modi übernommen werden,
- Ausgeben (240) eines Signals, das an den Fahrer gerichtet ist und die ermittelten Aufgaben anzeigt,
- automatische Aktivierung (250) des zweiten autonomen Modus.

2. Verfahren zur Unterstützung eines Fahrers eines Fahrzeugs nach Anspruch 1, **dadurch gekennzeichnet, dass**, wenn die Anzahl der Fahraufgaben des ersten autonomen Modus größer ist als die Anzahl der Fahraufgaben des zweiten autonomen Modus, das ausgegebene Signal dem Fahrer die zusätzlichen Aufgaben anzeigt, die auf ihn zukommen.

3. Verfahren zur Unterstützung eines Fahrers eines Fahrzeugs nach einem der Ansprüche 1 oder 2, **dadurch gekennzeichnet, dass**, wenn die Anzahl der Fahraufgaben des ersten autonomen Modus geringer ist als die Anzahl der Fahraufgaben des zweiten autonomen Modus, dann das ausgegebene Signal dem Fahrer die zusätzlichen Aufgaben anzeigt, von denen er entlastet wird.

4. Verfahren zum Unterstützen eines Fahrers eines Fahrzeugs nach einem der vorhergehenden Ansprüche, wobei in dem Schritt (220) des Bestimmens eines zweiten verfügbaren autonomen Modus, wenn mehrere Unterstützungsmodi verfügbar sind, dann der Unterstützungsmodus ausgewählt wird, der die größte Anzahl an Fahraufgaben übernimmt.

5. Verfahren zur Unterstützung eines Fahrers eines Fahrzeugs nach einem der vorhergehenden Ansprüche, **dadurch gekennzeichnet, dass** das Fahrassistenzsystem (1) mindestens einen der folgenden Unterstützungsmodi umfasst:
- Einen ersten Unterstützungsmodus, der weder die Längsbewegung des Fahrzeugs noch seine seitliche Bewegung steuert.
- Ein zweiter Unterstützungsmodus, der die Längsbewegung des Fahrzeugs, aber nicht seine seitliche Bewegung steuert;
- Ein dritter Unterstützungsmodus, der die Längsbewegung des Fahrzeugs und die Querbewegung unter der Aufsicht des Fahrers steuert;
- Ein vierter Unterstützungsmodus, der die Längsbewegung des Fahrzeugs und seine seitliche Bewegung ohne Aufsicht des Fahrers steuert.

6. Verfahren zur Unterstützung eines Fahrers eines Fahrzeugs nach einem der vorhergehenden Ansprüche, **dadurch gekennzeichnet, dass** das ausgegebene Signal eine Piktogrammanzeige für jede bestimmte Aufgabe umfasst.

7. Verfahren zur Unterstützung eines Fahrers eines Fahrzeugs nach einem der vorhergehenden Ansprüche, **dadurch gekennzeichnet, dass** das ausgegebene Signal eine Audionachricht umfasst, die die bestimmte(n) Aufgabe(n) anzeigt.

8. Verfahren zur Unterstützung eines Fahrers eines Fahrzeugs nach einem der Ansprüche 5 bis 7, **dadurch gekennzeichnet, dass** das Verfahren nur aktiviert wird, wenn mindestens der zweite autonome Modus verfügbar ist.

9. fahrerunterstützendes System (1) mit einem Bewertungsmodul, einer Steuereinheit (30) mit einem ersten autonomen Modus, der eine erste Gruppe von Fahraufgaben übernimmt, wenn er aktiviert ist, und Mitteln zur Erkennung einer künftigen Nichtverfügbarkeit des ersten autonomen Modus, **dadurch gekennzeichnet, dass**
die genannte Steuereinheit (30) umfasst:
- Mittel zur Bestimmung eines zweiten verfügbaren autonomen Modus, der einen zweiten Satz von Fahraufgaben gewährleistet,
- Mittel zur Bestimmung der Aufgaben, die nur von einem der beiden autonomen Modi übernommen werden,
- Mittel zum Senden eines Signals, das an den Fahrer gerichtet ist und die bestimmten Aufgaben anzeigt,
- Mittel zur Aktivierung des zweiten autonomen Modus.

10. Fahrzeug, **dadurch gekennzeichnet, dass** es ein Fahrerassistenzsystem (1) nach dem vorhergehenden Anspruch umfasst.

## Claims

1. Method for assisting a driver of a vehicle, the said method being implemented by a control unit (30) of a driving assistance system (1), comprising a first activated autonomous mode and providing a first set of driving tasks, the method comprising a step of detecting (210) a future deactivation of the first autonomous mode, the method being **characterised in that** it comprises the steps of :
- determining (220) a second available autonomous mode, providing a second set of driving tasks
- determining (230) the tasks performed only by one of the two autonomous modes
- sending (240) a signal to the driver indicating the determined tasks,
- automatically activating (250) the second autonomous mode.

2. A method of assisting a driver of a vehicle according to claim 1, **characterised in that** if the number of driving tasks of the first autonomous mode is greater than the number of driving tasks of the second autonomous mode, then the signal emitted indicates to the driver the additional tasks to be performed.

3. A method of assisting a driver of a vehicle according to any of claims 1 or 2, **characterised in that** if the number of driving tasks of the first autonomous mode is less than the number of driving tasks of the second autonomous mode then the transmitted signal indicates to the driver the additional tasks from which he or she is relieved.

4. A method of assisting a driver of a vehicle according to any of the preceding claims, in the step (220) of determining a second available autonomous mode, if more than one assistance mode is available then the assistance mode supporting the largest number of driving tasks is selected.

5. A method of assisting a driver of a vehicle according to any of the preceding claims, **characterized in that** the driving assistance system (1) comprises at least one of the following assistance modes:
- A first assistance mode controlling neither the longitudinal movement of the vehicle nor its lateral movement.
- A second assistance mode controlling the longitudinal movement of the vehicle, but not its lateral movement;
- A third mode of assistance controlling the longitudinal movement of the vehicle and its lateral movement, under the supervision of the driver;
- A fourth assistance mode controlling the longitudinal movement of the vehicle and its lateral movement, without driver supervision.

6. A method of assisting a driver of a vehicle according to one of the preceding claims, **characterised in that** the signal emitted comprises a pictogram display for each determined task.

7. A method of assisting a driver of a vehicle according to any of the preceding claims, **characterised in that** the emitted signal comprises an audio message indicating the determined task(s).

8. A method of assisting a driver of a vehicle according to any of claims 5 to 7, **characterised in that** said method is activated only if at least the second autonomous mode is available.

9. driving assistance system (1) comprising an evaluation module, a control unit (30) comprising a first autonomous mode providing a first set of driving tasks when it is activated and means for detecting a future non-availability of the first autonomous mode, **characterised in that**
said control unit (30) comprises :
- means for determining a second available autonomous mode, providing a second set of driving tasks,
- means for determining the tasks performed only by one of the two autonomous modes
- means for sending a signal to the driver indicating the determined tasks
- means for activating the second autonomous mode.

10. Vehicle **characterised in that** it comprises a driving assistance system (1) according to the preceding claim.
